# EUROPEAN PATENT APPLICATION

(11) **EP 2 472 437 A2**
(43) Date of publication of application: **04.07.2012**
(21) Application number: 11195870.8
(22) Date of filing: 28.12.2011
(51) Int. Cl.: G06K 19/07

(54) **Radio frequency identification system**

(30) Priority: 28.12.2010 KR 20100136935
(71) Applicant: LSIS Co., Ltd., Dongan-gu, Anyang-si Gyeonggi-do 431-080 (KR)
(72) Inventor: KI, Tae Hun, 156-786 Seoul (KR); Bae, Gyu Sung, 445-777 Gyeonggi-do (KR); Kim, Jong Bae, 137-753 Seoul (KR)
(74) Representative: HOFFMANN EITLE

(57) **Abstract**

The present invention relates to an RFID system in which an RFID tag has an adjustable detection range. An RFID system according to an embodiment of the present invention includes an RFID reader receiving a signal, reading the signal and transmitting a command signal; and an RFID tag having unique information, sensing the magnitude of the command signal received from the RFID reader, generating a voltage corresponding to the magnitude, and transmitting a response signal corresponding to the generated voltage to the RFID reader.

## Description

### CROSS-REFERENCE TO RELATED APPLICATIONS

The present application claims priority under 35 U.S.C. 119 and 35 U.S.C. 365 to Korean Patent Application No. 10-2010-0136935 (December 28, 2010), which is hereby incorporated by reference in its entirety.

### BACKGROUND

The present disclosure relates to a radio frequency identification (RFID) system including an RFID tag the detection range of which can be varied.

RFID systems are contactless identification systems used to wirelessly receive signals generated from RFID tags attached to various articles and process information about the articles.

Such an RFID system includes an RFID tag having unique information, an RFID reader reading a signal from the RFID and transmitting a corresponding command to the RFID tag, and other operating software and a network.

For the RFID reader to detect the RFID tag, first, the RFID tag should receive a signal transmitted from the RFID reader through an antenna of the RFID tag, and then the RFID reader should receive a response signal from the RFID tag without errors.

A detection range between the RFID reader and the RFID tag in which the RFID reader can detect the RFID tag is affected by the magnitude of a signal received at the RFID tag, the power consumption of the RFID tag, and the magnitude of a signal transmitted from the RFID reader.

Recently, applications of RFID systems are being gradually expanded, and the detection range between an RFID reader and an RFID tag is required to be varied from short distances to long distances. However, detection ranges of existing tags are specified by design parameters during fabrication and thus are similar. Moreover, detection ranges of tags cannot be adjusted without changing antenna or hardware configurations.

Accordingly, a response signal of an RFID tag is varied according to the magnitude of a signal received at an RFID tag, the power consumption of the RFID tag, and the magnitude of a signal transmitted from an RFID reader. As a result, in some cases, an RFID reader may not detect an RFID tag.

### SUMMARY

Embodiments provide an RFID system in which an RFID tag has an adjustable detection range.

In one embodiment, an RFID system includes an RFID reader receiving a signal, reading the signal and transmitting a command signal; and an RFID tag having unique information, sensing the magnitude of the command signal received from the RFID reader, generating a voltage corresponding to the magnitude, and transmitting a response signal corresponding to the generated voltage to the RFID reader.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a configuration of an RFID system in which a tag according to a first embodiment of the present invention has an adjustable detection range.

Fig. 2 is a block diagram illustrating a configuration of an RFID system in which a tag according to a second embodiment of the present invention has an adjustable detection range.

Fig. 3 is a block diagram illustrating a configuration of an RFID system in which a tag according to a third embodiment of the present invention has an adjustable detection range.

Fig. 4 is a block diagram illustrating a configuration of an RFID system in which a tag according to a fourth embodiment of the present invention has an adjustable detection range.

Fig. 5 is a view illustrating an internal circuit configuration of a received-signal control unit of an RFID system in which the tag according to the first embodiment of the present invention has an adjustable detection range.

Fig. 6 is a view illustrating an internal circuit configuration of a power consumption control unit of an RFID system in which the tag according to the second embodiment of the present invention has an adjustable detection range.

### DETAILED DESCRIPTION OF THE EMBODIMENTS

Reference will now be made in detail to the embodiments of the present disclosure, examples of which are illustrated in the accompanying drawings.

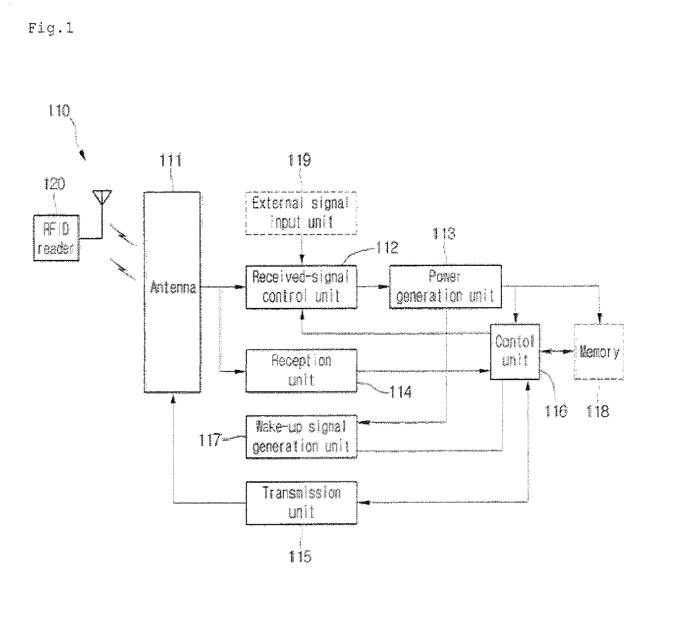

Fig. 1 is a block diagram illustrating a configuration of an RFID system in which a tag according to a first embodiment of the present invention has an adjustable detection range.

Referring to Fig. 1, the RFID system in which a tag according to a first embodiment of the present invention has an adjustable detection range includes an RFID tag 110 and an RFID reader 120.

The RFID tag 110 includes unique information and generates a signal of a certain frequency.

The RFID reader 120 receives a signal from the RFID tag 110 and reads the signal.

The RFID tag 110 includes an antenna 111, a received-signal control unit 112, a power generation unit 113, a reception unit 114, a transmission unit 115, a control unit 116, and a wake-up signal generation unit 117.

The antenna 111 transmits/receives signals to/from the RFID reader 120.

The received-signal control unit 112 controls the magnitude of an RF signal received through the antenna 111.

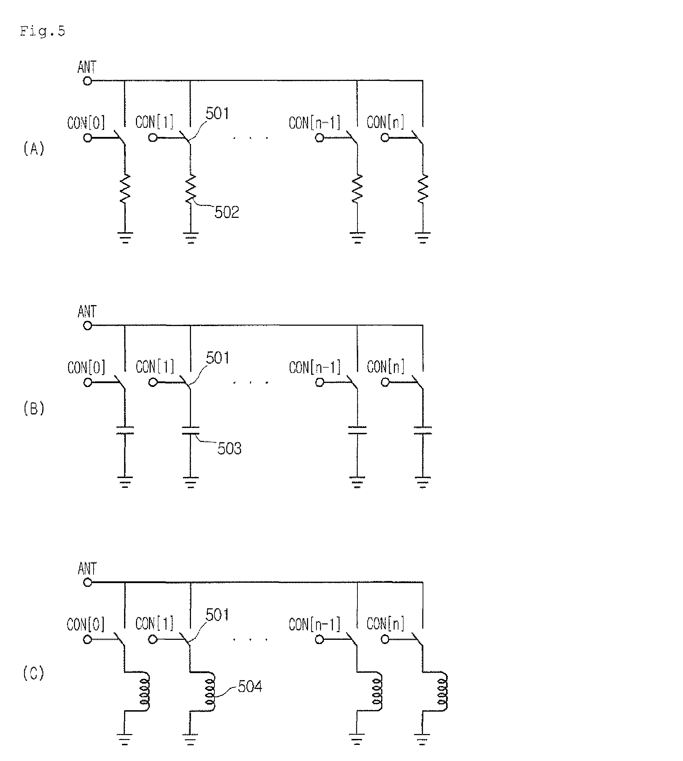

Fig. 5 is a view illustrating an internal circuit configuration of a received-signal control unit of an RFID system in which the tag according to the first embodiment of the present invention has an adjustable detection range.

Referring to FIG. 5, the received-signal control unit 112 may be configured with a combinational circuit in which a plurality of unit circuits connecting an on/off switch 501 with a resistor 502 in series are connected in parallel to each other as shown in (A) of Fig. 5. Also, the on/off switch 501 and a capacitor 503 may be connected as shown in (B) of Fig. 5 and the on/off switch 501 and an inductor 504 may connected as shown in (C) of Fig. 5 in the same manner as (A) of Fig. 5.

The received-signal control unit 112 controls the on/off switch 501 in a circuit to change impedance. Accordingly, the received-signal control unit 112 reduces the magnitude of a received signal received from the RFID reader 120 to reduce a detection range to the RFID tag 110.

In contrast, received signal may be amplified by the change of impedance. Accordingly, the effect is the same as that of the distance between the RFID reader 120 and the RFID tag 110 being less.

The power generation unit 113 receives an RF signal through the received-signal control unit 112 and generates a voltage. The generated voltage is converted to a DC by a rectifier (not shown) to be supplied to the RFID tag 110 of a system as a power source.

The reception unit 114 demodulates an RF signal input from the antenna 111 and converts the RF signal to digital data.

The transmission unit 115 transmits a response signal corresponding to a command signal received from the RFID reader 120. The response signal may be modulated to be suitable for a wireless communication, and then transmitted.

The control unit 116 controls and monitors operations and states of the elements. Also, the control unit 116 generates a command for controlling the magnitude of an RF signal received through the antenna 111 and outputs the command to the received-signal control unit 112. Also, the control unit 116 generates a response signal corresponding to the command signal received from the RFID reader 120 and outputs the response signal to the transmission unit 115.

The control unit 116 interprets the command received from the RFID reader 120 through the reception unit 114. The control unit 116 generates a command for the received-signal control unit 112 to control the magnitude of the RF signal received through the antenna 111, by using the interpreted value.

The wake-up signal generation unit 117 compares the voltage generated by the power generation unit 113 with a predetermined wake-up reference voltage. According to a result of the comparison, if the generated voltage is greater than the predetermined wake-up reference voltage, the wake-up signal generation unit 117 generates a wake-up signal and outputs the generated wake-up signal to the control unit 116.

A memory unit 118 may store data processed by the control unit 116 and unique information of the RFID tag 110. Also, the memory 118 may store a wake-up reference voltage value and a reference value for controlling the magnitude of a received RF signal.

An external signal input unit 119 may receive a control command from outside to control the received-signal control device.

In the RFID system according to the first embodiment of the present invention, the RFID tag 110 controls the magnitude of the RF signal received from the RFID reader 120 as above and adjusts the magnitude of the received signal. Accordingly, the effect is the same as that of the distance between the RFID reader 120 and the RFID tag 110 being greater or less, and thus a detection range of the RFID reader 102 is decreased or increased.

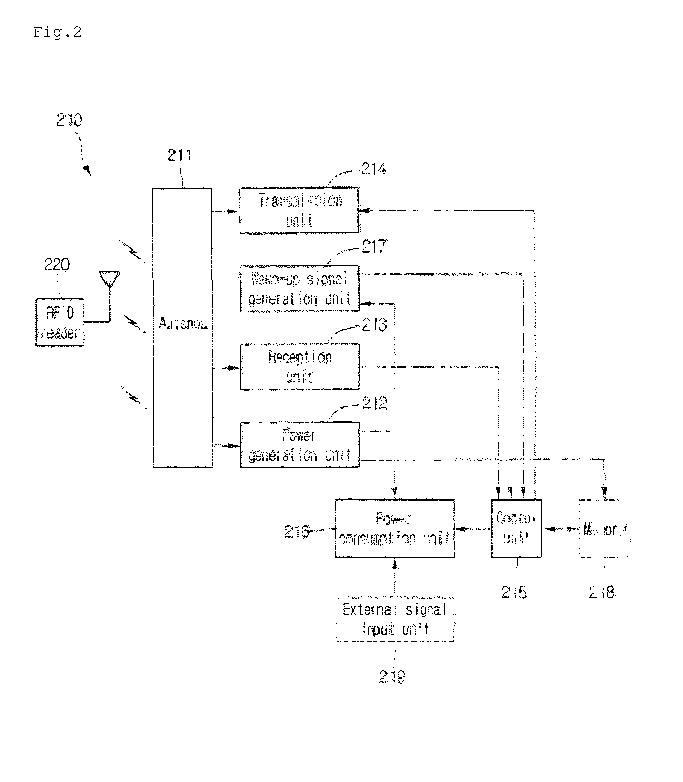

Fig. 2 is a block diagram illustrating a configuration of an RFID system in which a tag according to a second embodiment of the present invention has an adjustable detection range.

Referring to Fig. 2, the RFID system according to the second embodiment of the present invention includes the RFID tag 210 and the RFID reader 220, like the RFID system described in the first embodiment of Fig. 1.

The RFID tag 210 has unique information and transmits a signal of a certain frequency to the RFID reader 220.

The RFID reader 220 receives by radio and reads the signal from the RFID tag 210, and transmits an operation command signal to the RFID tag 210.

The RFID tag 210 includes an antenna 211, a power generation unit 212, a reception unit 213, a transmission unit 214, a control unit 215, a power consumption control unit 216, and a wake-up signal generation unit 117.

The antenna 211 transmits/receives signals to/from the RFID reader 220.

The power generation unit 212 generates a voltage corresponding to an RF signal received through the antenna 211. The generated voltage is supplied to the RFID tag as a power source.

The reception unit 213 demodulates the RF signal received through the antenna 211 and converts the RF signal to digital data.

The transmission unit 214 transmits a response signal corresponding to the RF signal received from the RFID reader 220 to the RFID reader 220.

The control unit 215 controls and monitors operations and states of the elements. The control unit 213 receives digital data from the reception unit 213, processes the digital data, and outputs the digital data to the transmission unit 214 which transmits the processed data to the RFID reader 22.

The control unit 215 interprets a signal received from the RFID reader 220 through the reception unit 213 according to the second embodiment of the present invention, and on the basis of the interpreted value, may generate a control command for the power consumption control unit 216 to control power.

The power consumption control unit 216 controls power consumed by the control unit 215 and the power consumption control unit 216.

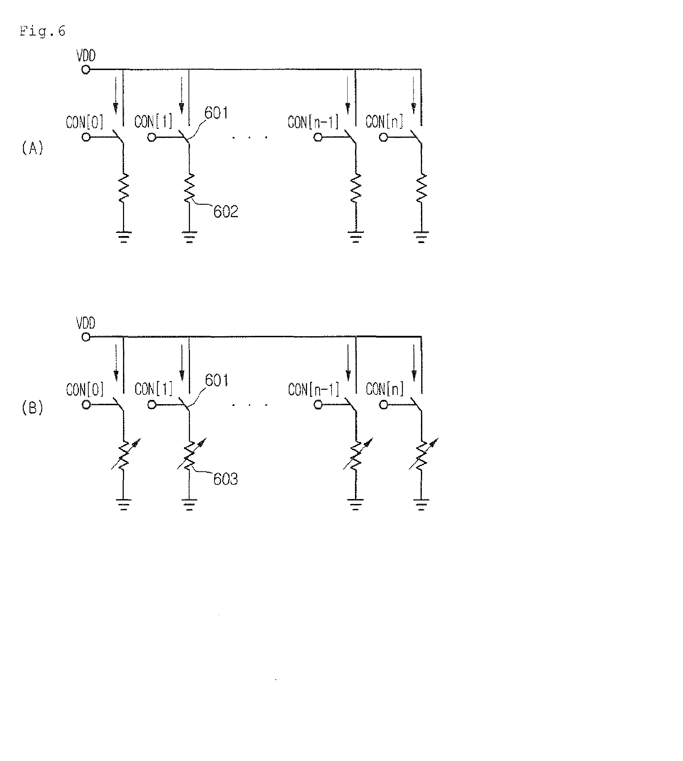

The power consumption control unit 216 will be described below in detail with reference to FIG. 6.

Fig. 6 is a view illustrating an internal circuit configuration of a power consumption control unit of an RFID system in which the tag according to the second embodiment of the present invention has an adjustable detection range.

Referring to FIG. 6, the power consumption control unit 216 may be configured with a combinational circuit in which a plurality of unit circuits connecting an on/off switch 601 with a resistor 602 in series are connected in parallel to each other as shown in (A) of Fig. 6. Also, the on/off switch 601 and a capacitor 603 may be connected as shown in (B) of Fig. 5 and the on/off switch 601 and an inductor 604 may connected as shown in (C) of Fig. 5 in the same manner as (A) of Fig. 5.

The power consumption control unit 216 controls operations of the on/off switch 601 to increase or decrease power consumption of the RFID tag 210.

Accordingly, the detection range of the RFID reader 220 to the RFID tag 210 is increased or decreased.

That is, if power consumption of the RFID tag 210 is increased, power for operating the RFID tag 210 is generated above average power consumption. Accordingly, the distance between the RFID reader 220 and the RFID tag 210 should be less, and thus a detection range of the RFID reader 102 to the RFID tag 210 is decreased.

In contrast, if power consumption of the RFID tag 210 is decreased, power for operating the RFID tag 210 is generated below the average power consumption. Accordingly, the distance between the RFID reader 220 and the RFID tag 210 should be greater, and thus a detection range of the RFID reader 102 to the RFID tag 210 is increased.

Accordingly, the detection range of the RFID reader 220 to the RFID tag 210 is adjustable by controlling power consumption of the RFID tag 210 as above.

The wake-up signal generation unit 117 compares the voltage generated by the power generation unit 212 with a predetermined wake-up reference voltage. According to a result of the comparison, if the generated voltage is greater than the predetermined wake-up reference voltage, the wake-up signal generation unit 117 generates a wake-up signal and outputs the generated voltage to the control unit 215.

The memory 218 may store a reference value for controlling the amount of power consumption of the power consumption control unit 216 and the control unit 215. The control unit 215 may generate a command for the power consumption control unit 216 to control power consumed by the control unit 215 and the power consumption control unit 216.

An external signal input unit 219 may receive a control command from outside. The power consumption control unit 216 may be controlled according to the input control command.

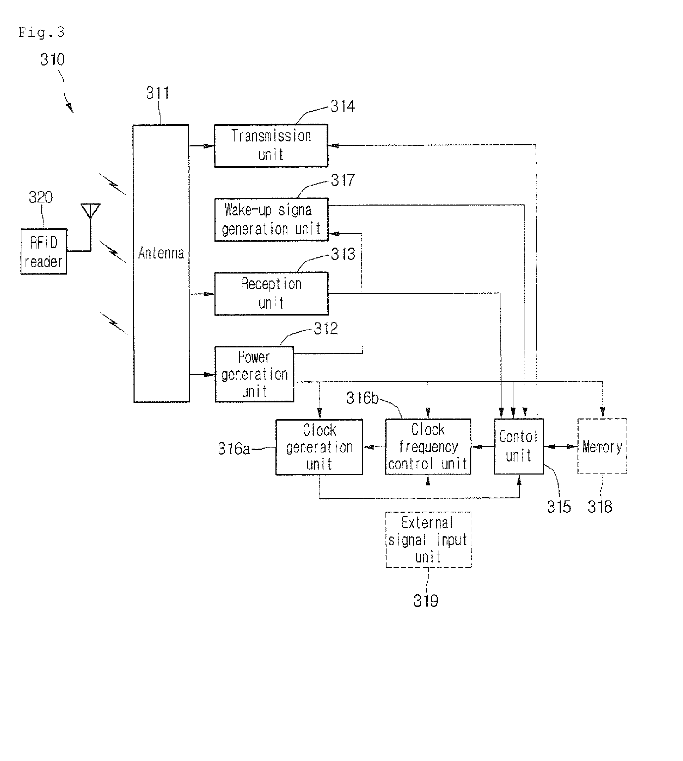

Fig. 3 is a block diagram illustrating a configuration of an RFID system in which a tag according to a third embodiment of the present invention has an adjustable detection range.

Referring to Fig. 3, the RFID system according to a third embodiment of the present invention includes a configuration for controlling power consumption as described in the second embodiment. However, the RFID system may not include the power consumption control unit 216 but a clock generation unit 316a and a clock frequency control unit 316b which will be described below.

The RFID system according to the third embodiment of the present invention includes an RFID tag 310 and an RFID reader 320.

The RFID tag 310 has unique information and generates a signal of a certain frequency.

The RFID reader 320 receives a signal from the RFID tag 310 wirelessly and reads the signal. Also, the RFID reader 320 transmits an operation command signal to the RFID tag 310.

The RFID tag 310 includes an antenna 311, a power generation unit 312, a reception unit 313, a transmission unit 314, a control unit 315, a clock generation unit 316a, a clock frequency control unit 316b, and a wake-up signal generation unit 317.

The antenna 311 transmits/receives signals to/from the RFID reader 320.

The power generation unit 312 generates a voltage corresponding to an RF signal received through the antenna 311. The generated voltage is supplied to the RFID tag as a power source.

The reception unit 313 receives the RF signal from the RFID reader 320 through the antenna 311. Also, the reception unit 313 demodulates the received RF signal and converts the signal to digital data.

The transmission unit 314 transmits a response signal corresponding to the RF signal received from the RFID reader 320 to the RFID reader 320.

The control unit 315 controls and monitors operations and states of the elements. The control unit 315 receives and processes data received from the reception unit 313, and generates a response signal corresponding to the data. The generated control signal is output to the transmission unit 314.

The control unit 315 interprets the instruction input from the RFID reader 320 through the reception unit 313. The control unit 315 may generate a control signal for controlling a frequency of a clock generated in the clock generation unit 316a on the basis of the interpreted value.

The clock generation unit 316a generates a clock required for the control unit 315 to process data and outputs the clock to the control unit 315.

The clock frequency control unit 316b controls a clock frequency generated by the clock generation 316a to control power consumption of the control unit 315 and the clock generation unit 316a.

The wake-up signal generation unit 317 compares the voltage generated by the power generation unit 312 with a predetermined wake-up reference voltage. According to a result of the comparison, if the generated voltage is greater than the reference voltage, the wake-up signal generation unit 317 generates a wake-up signal and outputs the generated voltage to the control unit 315.

A memory unit 318 may store data processed by the control unit 315 and unique information of the RFID tag 310. The memory 318 may store a reference value for controlling the amount of power consumption of the control unit 315 and the clock generation unit 316a. The control unit 315 generates a command on the basis of the reference value for the clock frequency control unit 316b to control the clock frequency generated by the clock generation unit 316a.

An external signal input unit 319 may receive a control signal from outside to control the clock frequency control unit 316b.

As above, the RFID system according to the third embodiment of the present invention may control a clock frequency related to clock generation and thus adjust power consumption of the RFID tag 310. Accordingly, the detection range of the RFID reader 320 to the RFID tag 310 is adjustable.

That is, if the clock frequency control unit 316b increases the clock frequency, the clock generation unit 316a generates a fast clock, thereby increasing power consumption of the control unit 315. In this case, if power consumption of the RFID tag 310 is increased, power is generated more than average power consumption to operate the RFID tag 310. Accordingly, the distance between the RFID reader 320 and the RFID tag 310 should be less, and thus a detection range of the RFID reader 102 to the RFID tag 310 may be decreased.

In contrast, if power consumption of the RFID tag 310 is decreased, power less than the average power consumption is required to operate the RFID tag 310. Accordingly, the distance between the RFID reader 320 and the RFID tag 310 should be greater, and thus a detection range of the RFID reader 320 to the RFID tag 310 may be extended.

Accordingly, the detection range of the RFID reader 320 to the RFID tag 310 is adjustable by controlling the clock frequency as above and thus controlling power consumption of the RFID tag 310.

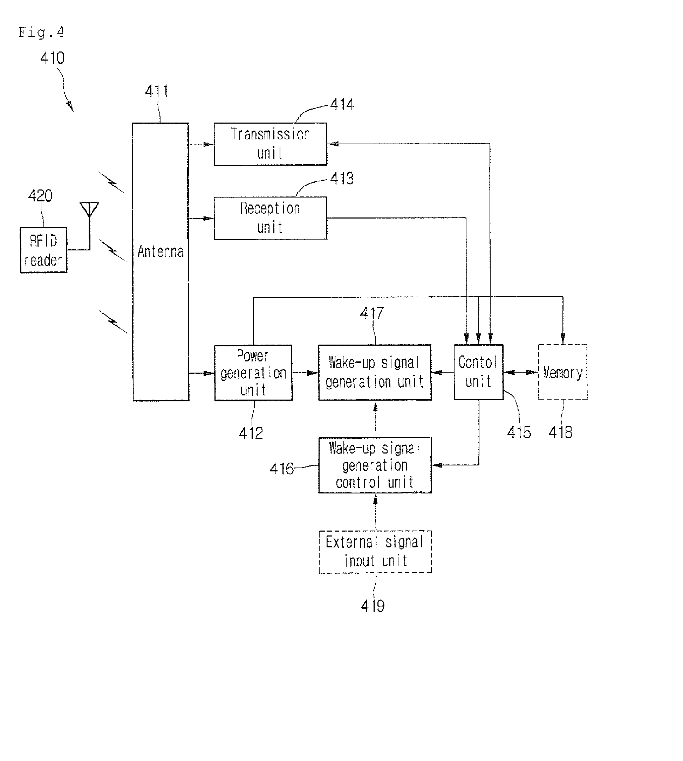

Fig. 4 is a block diagram illustrating a configuration of an RFID system in which a tag according to a fourth embodiment of the present invention has an adjustable detection range.

Referring to Fig. 4, the RFID system according to the embodiment of the present invention includes an RFID tag 410 and an RFID reader 420.

The RFID tag 410 has unique information and generates a signal of a certain frequency.

The RFID reader 420 reads an RF signal received from the RFID tag 410 and transmits an operation command signal to the RFID tag 410.

The RFID tag 410 includes an antenna 411, a power generation unit 412, a reception unit 413, a transmission unit 414, a control unit 415, a wake-up signal generation control unit 416, and a wake-up signal generation unit 417.

The antenna 411 transmits/receives signals to/from the RFID reader 420.

The power generation unit 412 generates a voltage corresponding to an RF signal received through the antenna 311. The generated voltage is supplied to the RFID tag 410 as a power source.

The reception unit 413 receives an RF signal from the RFID reader 420 through the antenna 411. Also, the reception unit 313 demodulates the received RF signal and converts the signal to digital data.

The transmission unit 414 transmits a response signal corresponding to the RF signal received from the RFID reader 420 to the RFID reader 420.

The control unit 415 controls operations and states of the elements. The control unit 415 receives and processes data received from the reception unit 413, and generates a response signal corresponding to the data.

The control unit 415 may interpret a command received from the RFID reader 420 through the reception unit 413, and using the interpreted value, the wake-up signal generation control unit 416 may generate a wake-up control signal related to wake-up signal generation.

The wake-up signal generation control unit 416 generates a control signal for generating a wake-up signal according to a command of the control unit 415.

The wake-up signal generation unit 417 receives a wake-up control signal generated from the wake-up signal generation unit 416 and generates a wake-up reference voltage. The wake-up signal generation unit 417 compares the voltage generated by the power generation unit 412 with the wake-up reference voltage. According to a result of the comparison, if the voltage generated by the power generation unit 412 is greater than the wake-up reference voltage, the wake-up signal generation unit 417 generates a wake-up signal and outputs the wake-up signal to the control unit 415.

A memory unit 418 stores data processed by the control unit 415 and unique information of the RFID tag 410. Also, the memory 418 may store a predetermined wake-up reference voltage value for controlling a wake-up signal generation.

An external signal input unit 419 may receive a control signal for controlling the wake-up signal generation control unit 416 from outside.

In the RFID system according to the fourth embodiment of the present invention, the magnitude of a received signal of the RFID tag 410 is generally proportional to the distance between the RFID tag 410 and the RFID reader 420. That is, the power generation unit 412 of the RFID tag 410 generates a voltage on the basis of the RF signal received through the antenna 411. The wake-up signal generation unit 417 compares the generated voltage with the predetermined wake-up reference voltage. According to a result of the comparison, if the voltage generated by the power generation unit 412 is greater than the wake-up reference voltage, the wake-up signal generation unit 417 generates a wake-up signal and outputs the wake-up signal to the control unit 415.

Accordingly, the wake-up reference voltage is controlled through the wake-up signal generation control unit 416, thereby adjusting the magnitude of the voltage generated by the power generation unit 412.

That is, if the wake-up reference voltage is controlled to be greater, the RFID tag 410 generates a voltage greater than the wake-up reference voltage which is increased to generate a wake-up signal. Accordingly, to generate greater voltage, the separation distance between the RFID tag 410 and the RF reader 420 should be short, and thus the detection range of the RFID reader 420 to the RFID tag 410 is shortened.

In contrast, if the wake-up reference voltage is controlled to be less, the RFID tag 410 generates a voltage less than the wake-up reference voltage which is increased to generate a wake-up signal. Accordingly, the detection range of the RFID reader 420 to the RFID tag 410 is lengthened.

The RFID system according to the first to fourth embodiments of the present invention can control the magnitude of a received signal by the received-signal control unit, control the amount of power consumption of the RFID tag by the power consumption control unit, control the amount of power consumption of the RFID tag by the clock frequency control unit, control the magnitude of the wake-up reference voltage generated in the wake-up signal generation unit, thereby controlling the detection range of the RFID reader to the RFID tag.

Any reference in this specification to " one embodiment," " an embodiment," " exemplary embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with others of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An RFID system comprising:
an RFID reader receiving a signal, reading the signal, and transmitting a command signal; and
an RFID tag having unique information, sensing the magnitude of the command signal received from the RFID reader, generating a voltage according to the magnitude of the command signal, and adjusting a tag detection range according to the generated voltage.

2. The RFID system according to claim 1, wherein the RFID tag comprises:
an antenna communicating a signal with the RFID reader;
a received-signal control unit controlling the magnitude of an RF signal received through the antenna;
a power generation unit generating a voltage corresponding to the RF signal received from the received-signal control unit;
a transmission unit transmitting a response signal corresponding to the RF signal received through the antenna under the control of the control unit to the RFID reader; and
a memory storing a predetermined reference value for controlling the magnitude of the received signal.

3. The RFID system according to claim 2, wherein the RFID tag further comprises:
a wake-up signal generation control unit generating a wake-up signal according to the input signal; and
a wake-up signal generation unit comparing the voltage generated by the power generation unit with the predetermined wake-up reference voltage and generating a wake-up signal according to a result of the comparison.

4. The RFID system according to claim 2, wherein the received-signal control unit is configured by connecting in parallel a plurality of unit circuits each comprising an on/off switch and a resistor, capacitor, or inductor connected to the on/off switch in series.

5. An RFID system comprising:
an RFID reader receiving a signal, reading the signal, and transmitting a command signal; and
an RFID tag having unique information, sensing the magnitude of the command signal received from the RFID reader, and adjusting a tag detection range according to power consumption.

6. The RFID system according to claim 5, wherein the RFID tag comprises:
an antenna communicating a signal with the RFID reader;
a received-signal control unit controlling the magnitude of an RF signal received through the antenna;
a transmission unit transmitting a response signal corresponding to the RF signal received through the antenna to the RFID reader;
a control unit outputting a command corresponding to the RF signal received through the antenna under the control of the received-signal control unit;
a power consumption control unit controlling power consumption of the control unit and the power consumption control unit; and
a memory unit storing power consumption reference values of the control unit and the power consumption control unit.

7. The RFID system according to claim 6, wherein the control unit interprets the command received from the RFID reader through the reception unit, and
the power consumption control unit generates a command by using the interpreted value for controlling power consumption of the control unit and the power consumption control unit.

8. The RFID system according to claim 6, wherein the power consumption control unit is configured by connecting in parallel a plurality of unit circuits each having an on/off switch and a resistor, capacitor, or inductor connected to the on/off switch in series.

9. The RFID system according to claim 5, wherein the RFID tag comprises:
an antenna communicating a signal with the RFID reader;
a power generation unit generating a voltage corresponding to an RF signal received through the antenna;
a reception unit receiving the RF signal received through the antenna;
a transmission unit transmitting a response signal corresponding to the command from the RFID reader;
a control unit generating a response signal corresponding to the RF signal received from the reception unit;
a clock generation unit generating a clock according to the data processing of the control unit; and
a clock frequency control unit controlling power consumption of the control unit and controlling a clock frequency generated by the clock generation unit.

10. The RFID system according to claim 9, wherein the RFID tag further comprises a wake-up signal generation unit,
wherein the wake-up signal generation unit compares the voltage generated by the power generation unit with a predetermined wake-up reference voltage, and if the generated voltage is greater than the reference voltage, the wake-up signal generation unit generates a wake-up signal and transmits the wake-up signal to the control unit.

11. The RFID system according to claim 9, wherein the RFID tag further comprises a memory unit storing a reference value of power consumption for adjusting the amount of the power consumption of the control unit and the clock generation unit.

12. The RFID system according to at least one of claims 7 and 9, wherein the RFID tag further comprises an external signal input unit receiving an external signal from outside for controlling the amount of power consumption.
